# EUROPEAN PATENT SPECIFICATION

(11) **EP 0 654 941 B1**
(45) Date of publication and mention of the grant of the patent: **01.03.2000**
(21) Application number: 94308624.9
(22) Date of filing: 23.11.1994
(51) Int. Cl.: H04N 5/14

(54) **Motion detection circuit and method using spatial information**
Schaltung und Verfahren zur Bewegungsdetektion mittels räumlicher Information
Circuit et procédé de détection de mouvement employant des données d'espace

(30) Priority: 24.11.1993 KR 9325126
(43) Date of publication of application: 24.05.1995
(73) Proprietor: Samsung Electronics Co., Ltd., Suwon-city, Kyungki-do 441-370 (KR)
(72) Inventor: Lee, Myeong-hwan, 104-712, Wonchon Jukong Apt., Suwon-city, Kyungki-do (KR)
(74) Representative: Neill, Alastair William

(56) References cited:
- EP-A- 0 528 366
- US-A- 4 661 853

## Description

The present invention relates to a technology of motion detection when processing a video signal, and more particularly to a motion detection circuit and method using spatial information, in which the number of bits of a video signal is not limited as only one bit and spatial information of various directions is obtained as necessary, thereby accurately detecting motion as well as effectively using a frame memory.

Generally, in a video signal processor equipment such as a high definition television, a video tape recorder and a camera, detection of motion is used for encoding a video signal. To compress motion image data, an adjacent interframe difference signal is encoded. To improve a quality of a picture, the picture is divided into blocks each of which has a predetermined magnitude, adjacent interframe motion is found, the picture is shifted by a moved distance and an interframe difference signal is made small. Here, finding the interframe motion by blocks is called a motion estimation and a moved distance is called a motion vector. Also, it is called a motion compensation that a block of a currently processed frame is compensated using a block of preceding frame corresponding to the currently processed frame block.

A conventional and basic motion detection circuit uses a frame memory to obtain an interframe difference signal and/or between two frames, determines whether the video signal is in a motion domain or a still domain by comparing the difference signal with a preset reference value. Such a motion detection circuit requires a frame memory, thereby causing an increase of costs. Thus, such an existing motion detection circuit has not been used in a normal video equipment except for an improved definition TV or an enhanced definition TV. Most video equipment processes a video signal in a horizontal vertical two dimensional domain. However, a still domain processing is advantageous for processing a signal using a frame memory, while a motion domain processing is advantageous for processing a signal in a spatial domain. Thus, it is not efficient to process a signal in only a spatial domain. To effectively solve such a problem, it is necessary to simplify hardware of the motion detection circuit and to lower the costs therefor.

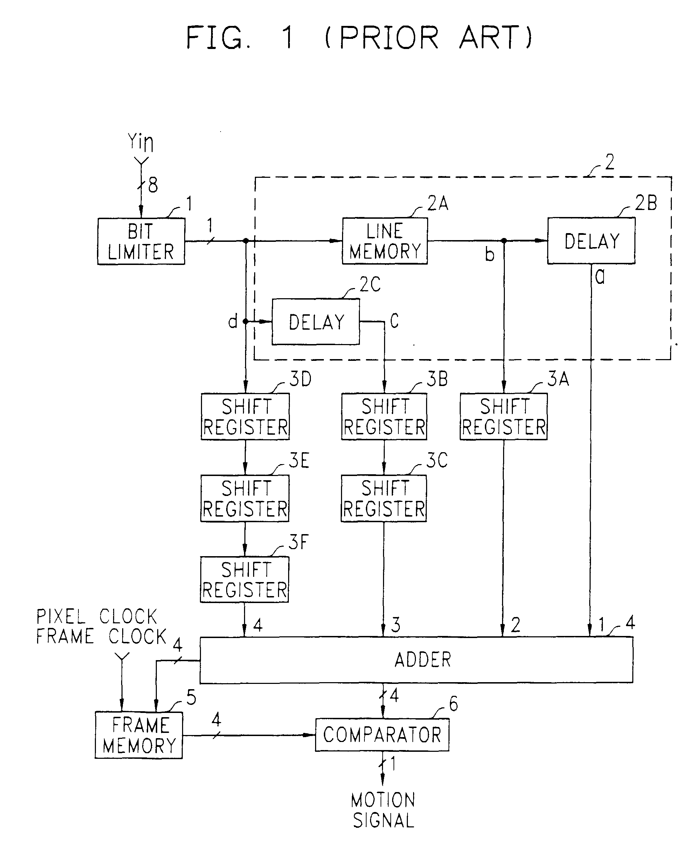

Figure 1 is a circuit diagram for a conventional one bit motion detection circuit. As shown in Figure 1 the conventional motion detection circuit includes a bit limiter 1 which compares an input 8-bit video signal Yᵢₙ with a predetermined value and converts the input video signal into a 1-bit signal according to the comparison result. A memory portion 2 is connected to bit limiter 1. Memory portion 2 includes a line memory 2A for storing the output of bit limiter 1 in units of a line, a delay 2B for delaying the output of line memory 2A for a one-sample period, and a delay 2C for delaying the output of bit limiter 1 for a one-sample period. A shift register 3A is connected to the output of line memory 2A, to shift the output of line memory 2A by one bit. Also, two shift registers 3B and 3C are connected in series to the output of delay 2C, to shift the output of delay 2C by two bits. Also, three shift registers 3D through 3F are connected in series to the output of bit limiter 1, to shift the output of bit limiter 1 by three bits. The outputs of delay 2B and shift registers 3A, 3C and 3F are applied to adder 4. Adder 4 adds the input signals and outputs a 4-bit signal. A frame memory 5 and a comparator 6 are connected to the output of adder 4, respectively. Frame memory 5 stores the 4-bit signal output from adder 4 according to an input pixel clock and a frame clock, and outputs the stored signal for comparator 6. Comparator 6 compares the output of adder 4 with the output of frame memory 5, and outputs a motion signal which represents whether the input video signal is in a motion domain or a still domain. A similar system is disclosed in US-A-4 661 853.

If an 8-bit video signal Yᵢₙ is input to the conventional circuit constructed above, bit limiter 1 compares whether input signal Yᵢₙ is larger or smaller than a decimal number of 127. As a result, if input signal Yᵢₙ is smaller than 127, a value of zero is output, while if not a value of one is output. Thus, the 8-bit video signal is limited and output as a one-bit signal, which is applied to line memory 2A, delay 2C and shift register 3D, respectively.

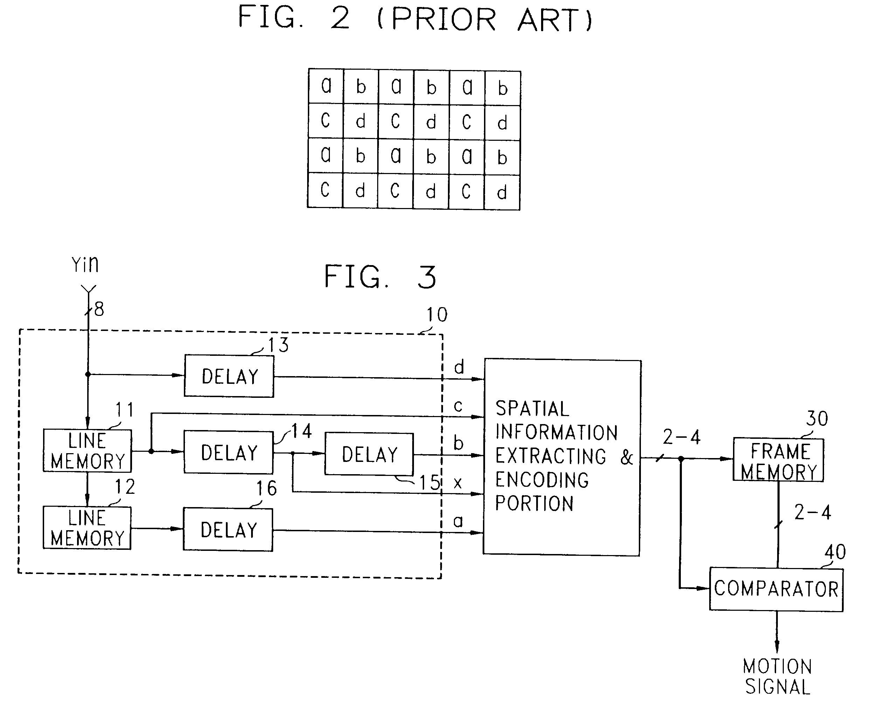

Figure 2 shows a sample constitution diagram which represents a unit of a conventional encoding, in which each frame is divided into a unit of a 2 x 2 block constituted by two horizontal pixels and two vertical pixels. In Figure 1, line memory 2A and two delays 2B and 2C are for making a form of the samples as shown in Figure 2. The 1-bit signal output from bit limiter 1 is delayed for a one-line period, to then be applied to shift register 3A as a sample "b". The signal delayed by line memory 2A is delayed for a one-sample period by delay 2B, to then be applied to adder 4 as a sample "a". Also, the signal output from bit limiter 1 is directly applied to shift register 3D as a sample "d". Further, the signal output from bit limiter 1 is delayed for a one-sample period, to then be applied to shift register 3B as a sample "c".

The samples "a" through "d" are shifted by the number of bits capable of constituting a codeword in shift registers 3A through 3F, to then be added in adder 4 to become a 4-bit codeword. That is, sample "b" is shifted one bit by shift register 3A, sample "c" is shifted by two bits by shift registers 3B and 3C, and sample "d" is shifted three bits by shift registers 3D through 3F, to then be applied to adder 4, respectively. Adder 4 adds the outputs of shift registers 3A, 3C and 3F to output a 4-bit signal. As described above, codeword w is expressed as 2⁰a+2¹b+2²c+2³d. The output of adder 4 is stored in frame memory 5 and also applied to comparator 6. Comparator 6 compares the output of adder 4 with the previous signal output from frame memory 5. As a result, in case of a motion domain, a value of zero is output while in case of a still domain, a value of 1 is output.

As described above, the conventional art uses a signal which is converted into a one-bit signal to obtain one-bit motion based on a frame difference. However, since the value which is already converted into the one-bit signal is processed, it is not possible to accurately detect the motion although four pixels on the field are used. That is, since the input signal is limited as a one-bit or proper bits less than or equal to 8-bit, a misoperation with respect to noise can be reduced. However, in such conventional art, a motion domain is extremely reduced in a domain having a similar level to finally perform a still domain processing, thereby causing degradation of the quality of picture. As such, misinterpreting the motion domain into the still domain results in more severe picture degradation than in that of the reverse case.

For example, if the motion domain is misinterpreted into the still domain and the previous field signal is used as an interpolation signal in case of being interlaced to progressive scan conversation, interline distance becomes irregular and causes degradation of picture quality as an amount of the motion is more severe. However, when the still domain is interpreted into the motion domain, since intra-field processing is performed, vertical resolution is reduced but an unacceptable picture does not result from this misoperation.

In Figure 1, although the motion detection is performed by four horizontal-vertical samples and an output signal is processed using a 5-point median filter at the next stage (not shown), since the above problem is due to a length of bits of a frame difference, it has not been solved until the length of the bits is increased. However, when the length of the bits is increased, one of the most important merits in the conventional art is lost, that is, simplification of the hardware by reducing frame memory capacity due to the bit reduction from 8 bits to 1 bit is not obtained.

Therefore, with a view to solving or reducing the above problems, it is an aim of preferred embodiments of the present invention to provide a motion detection method using spatial information capable of effectively removing a misoperation without largely increasing an amount of hardware, in which spatial correlation information having an excellent motion detection performance is obtained when processing a signal in a spatial domain, and then the obtained correlation information is compared with a post-frame, thereby accurately detecting an amount of motion.

Another aim is to provide an apparatus embodying the above method.

According to a first aspect of the present invention there is provided a motion detection circuit using spatial information, the circuit comprising:
a memory portion for delaying an input video signal comprising successive frames, and for sampling the delayed signal to provide a sample format comprising a plurality of pixels from which spatial correlation information can be extracted;
a spatial information extracting and encoding portion for obtaining subtraction values between peripheral pixels of the sample format using the sample signals output from the memory portion, detecting a degree of correlation in various directions in a field of a frame by comparing the subtraction value with a preset reference value, and encoding the result into spatial correlation information;
a memory for storing spatial correlation information output from the spatial information extracting and encoding portion; and
a comparator portion for comparing the output signal of the spatial information extracting and encoding portion with previous frame spatial correlation information output from the memory and outputting a motion signal which represents whether the input video signal is in a motion domain or a still domain.

Preferably, said memory portion comprises:
a first delay for delaying the input video signal for a one-sample period and making the one-sample delayed signal into a first sample;
a first line memory for delaying the input video signal for a one-line period and making the one-line delayed signal into a second sample;
a second delay for delaying the output of said first line memory for a one-sample period and making the one-sample delayed signal into a third sample;
a third delay for delaying the output of said second delay for a one-sample period and making the one-sample delayed signal into a fourth sample;
a second line memory for delaying the output of said first line memory for a one-line period; and
a fourth delay for delaying the output of said second line memory for a one-sample period and making the one-sample delayed signal into a fifth sample.

Said memory portion may further comprise:
a fifth delay for delaying the output of said first delay for a one-sample period and making the one-sample delayed signal into a sixth sample; and
a sixth delay for delaying the output of said fourth delay for a one-sample period and making the one-sample delayed signal into a seventh sample.

Preferably, said spatial information extracting and encoding portion comprises:
a first subtracter for subtracting the fifth and first sample signals which are applied from said memory portions;
a second subtracter for subtracting sample signals fourth and second which are applied from said memory portions;
a first absolute value calculator for obtaining an absolute value of the output of said first subtracter;
a second absolute value calculator for obtaining an absolute value of the output of said second subtracter;
a first comparator for comparing the output of said first absolute value calculator with a preset reference value to generate one-bit spatial correlation information; and
a second comparator for comparing the output of said second absolute value calculator with a preset reference value to generate one-bit spatial correlation information.

Preferably, said comparator portion checks how many bits having the same value there are, and estimates the motion by proportionally changing an amount of motion according to the number of same value bits.

Said comparator portion may estimate that there is no motion until the number of the same bits becomes a predetermined number, while said comparator portion estimates the motion by proportionally changing the amount of motion according to the number of the same bits when the number of the same bits is equal to or larger than a predetermined number.

According to a second aspect of the present invention, there is provided a motion detection method using spatial information, comprising the steps of:
delaying an input video signal comprising successive frames and sampling the delayed signal to provide a sample format comprising a plurality of pixels from which spacial correlation information can be extracted;
obtaining subtraction values of the sample signals, comparing the subtraction value with a reference value, encoding the result into spatial correlation information and extracting said spatial correlation information which has been encoded into a number of bits; and
comparing the currently extracted spatial correlation information with previous frame spatial correlation information and determining whether the input signal is in a motion domain or a still domain.

Preferably, said spatial correlation information extracting step obtains two-bit spatial correlation information according to the following equations:
in case of |a-d| <th1, m0=0; in case of |a-d|≥th1, m0=1;
in case of |c-b| <th2, m1=0; and in case of |c-b|≥th2,m1=1
wherein said a, b, c and d are a one-sample signal, respectively, said th1 and th2 are a reference value according to a direction characteristic and noise, respectively, and said m0 and m1 are the two-bit spatial correlation information, respectively. Said spatial correlation information extracting step may further comprise the steps of obtaining one-bit spatial correlation information according to the following equations and adding the obtained one-bit correlation information to the other two-bit spatial correlation information:
in case of x <th3, m2=1; and in case of x≥th3, m2=0, wherein said x represents a one-sample signal, said th3 is a preset reference value and said m2 is spatial correlation information.

Said spatial correlation information extracting step may further comprise the steps of obtaining two-bit spatial correlation information according to the following equations and adding the obtained two-bit correlation information to the other two-bit spatial correlation information:
in case of |e-h| <th3, m2=0; in case of |e-h|≥ th3, m2=1;
in case of |f-g| <th3, m3=0; and in case of |f-g|≥th3,m3=1
wherein said e, f, g and h are a one-sample signal, respectively, said th3 is a preset reference value, and said m2 and m3 are spatial correlation information, respectively.

Said spatial correlation information extracting step may comprise the steps of obtaining four-bit spatial correlation information using a different signal between a center pixel and peripheral pixels obtained according to the following equations:
in case of |a-x| <th1, m0=0; in case of |a-x|≥th1, m0=1;
in case of |b-x| <th2, m1=0; in case of |b-x|≥th2, m1=1;
in case of |c-x| <th2, m2=0; in case of |c-x|≥th2, m2=1;
in case of |d-x| <th1, m3=0; and in case of |d-x|≥, m3=1
wherein said a, b, c, d and x are a one-sample signal, respectively, said th1 and th2 are a reference value set according to a direction characteristic and noise, respectively, and said m0, m1, m2 and m3 are spatial correlation information, respectively.

Said spatial correlation information extracting step may further comprise the steps of obtaining one-bit spatial correlation information according to the following equations and adding the obtained one-bit correlation information to the other four-bit spatial correlation information:
in case of x <th3, m3=1; and
in case of x≥ th3, m3=0,
wherein said th3 is a preset reference value and said m3 is spatial correlation information.

For a better understanding of the invention, and to show how embodiments of the same may be carried into effect, reference will now be made, by way of example, to the accompanying diagrammatic drawings, in which:
Figure 1 is a conventional 1-bit motion detection circuit diagram;
Figure 2 shows a sample constitution which represents a unit of a conventional encoding;
Figure 3 is a block diagram of a motion detection circuit using spatial information according to a preferred embodiment of the present invention;
Figure 4 shows a sample position necessary for extracting spatial correlation information according to an embodiment of the present invention;
Figure 5 is a block diagram showing a detailed construction of a spatial information extracting and encoding portion in Figure 3;
Figure 6 is a block diagram of another embodiment of a memory portion in Figure 3; and
Figure 7 is a characteristic graph for a soft-switch processing in a comparator portion of Figure 3.

Preferred embodiments of the present invention will be described below in more detail with reference to Figures 3 through 7.

Figure 3 shows an embodiment of a motion detection circuit, using spatial information in accordance with the present invention, in the Figure a memory portion 10 delays an input 8-bit video signal Yᵢₙ and makes the delayed signal into a sample format from which the spatial correlation information can be extracted. Here, memory portion 10 includes two line memories 11 and 12 and four delays 13 to 16. The connection therebetween will be described in more detail later on. The sample signals output from memory portion 10 are applied to a spatial information extracting and encoding portion 20. The spatial information extracting and encoding portion 20 obtains a subtraction value between peripheral pixels using the input sample signals, compares the obtained subtraction value with a preset reference value to detect a degree of correlation in various directions on a field, and then encoding the detected correlation degree into predetermined bits to output the encoded result. A frame memory 30 is connected to the output of spatial information extracting and encoding portion 20, to store the spatial correlation information encoded in spatial information extracting and encoding portion 20. The spatial correlation information output from spatial information extracting and encoding portion 20 and the previous frame spatial correlation information output from frame memory 30 are applied to a comparator 40. Comparator 40 compares the output of spatial information extracting and encoding portion 20 with the output of frame memory 30, and generates a motion signal which represents whether the input signal is in a motion domain or a still domain.

If an 8-bit video signal Yᵢₙ is input to a motion detection circuit as constructed above, memory portion 10 delays input signal Yᵢₙ and then makes the delayed signal into a form of sampling necessary for extracting the spatial correlation information.

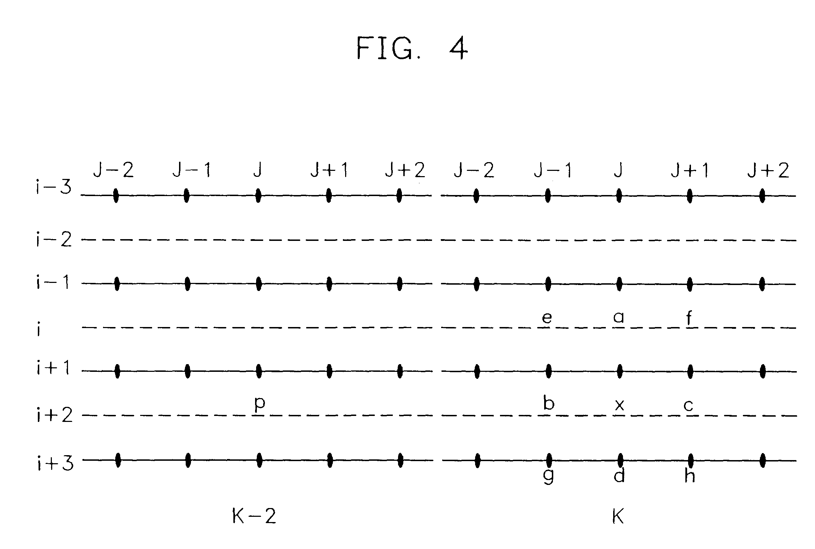

Figure 4 shows a sample position necessary for extracting spatial correlation information according to the present invention. In Figure 4, a reference character i represents a vertical line number, a reference character j represents a j-t pixel of line i, a reference character k is a field number, and a reference character p represents a previous frame pixel. In Figure 3, two line memories 11 and 12 and four delays 13 to 16 are for making the sample form as shown in Figure 4. The 8-bit video signal Yᵢₙ input to memory portion 10, is delayed by a one sample period by delay 13 and applied to spatial information extracting and encoding portion 20 as sample d. Also, the 8-bit signal Yᵢₙ is delayed for a one line period by line memory 11 and then applied to spatial information extracting and encoding portion 20 as sample c. The output of line memory 11 is delayed for a two-sample period by delays 14 and 15, and then applied to spatial information extracting and encoding portion 20 as sample b. The output of delay 14 is directly input to spatial information extracting and encoding portion 20 as sample x. Also, the output of line memory 11 is delayed for a one-line period by line memory 12. The one-line delayed signal passes through delay 16, and is delayed again for a one-sample period to then be applied to spatial information extracting and encoding portion 20 as sample a.

The spatial information extracting and encoding portion 20 obtains a subtraction value using the input sample signals, compares the obtained subtraction value with a preset reference value, detects a degree of correlation in various directions on a field, and then encodes the correlation degree into predetermined bits to output the encoded result. Here, the methods for obtaining a horizontal and vertical correlation degree can be represented as the following three kinds.

The first method is to obtain 2-bit spatial correlation information. An absolute value of a subtraction value between samples a and d is obtained and the absolute value is compared with a reference value th1. If the absolute value is smaller than reference value th1, a value of zero is output. If not, a value of one is output. Also, an absolute value of a subtraction value between samples c and b is obtained and the absolute value is compared with a reference value th2. If the absolute value is smaller than reference value th2, a value of zero is output. If not, a value of one is output. That is,
in case of |a-d| <th1, m0=0, in case of |a-d|≥ th1, m0=1,
in case of |c-b| <th2, m1=0, and in case of |c-b|≥th2, m1=1.

The second method is a combination of the above first method with the conventional one-bit motion detection method. In this case, three-bit spatial correlation information can be obtained, the obtained spatial correlation information is added to the information on the field, and then a degree of correlation on a time basis is searched. Accordingly, more improved motion detection is performed. At first, an absolute value of a subtraction value between samples a and d is obtained and the absolute value is compared with reference value th1. If the absolute value is smaller than reference value th1, a value zero is output. If not, a value of one is output. Likewise, an absolute value of a subtraction value between samples c and b is obtained and the absolute value is compared with reference value th2. If the absolute value is smaller than reference value th2, a value of zero is output. If not, a value of one is output. Also, sample x is compared with reference value th3. If a value of sample x is larger than reference value th3, a value of one is output. If not, a value of zero is output. That is,
in case of |a-d| <th1, m0=0, in case of |a-d|≥ th1, m0=1,
in case of |c-b| <th2, m1=0, in case of |c-b|≥ th2, m1=1,
in case of x> th3, m2=1, and in case of x≤th3, m2=0.

The third method is to obtain correlation information due to a difference signal between a centre pixel (sample x) and peripheral pixels in extracting information on a filed to use the obtained correlation information as a motion detection signal. In this case, four-bit spatial correlation information can be obtained. Also, in this case, the conventional one-bit motion detection method is used as in the second method to obtain centre pixel information, which is used for the motion detection. In the third method, an absolute value of a subtraction value between samples a and x is obtained and the absolute value is compared with reference value th1. If the absolute value is smaller than reference value th1, a value of zero is output. If not, a value of one is output. Likewise, an absolute value of a subtraction value between samples b and x is obtained and the absolute value is compared with reference value th2. If the absolute value is smaller than reference value th2, a value of zero is output. If not, a value of one is output. Likewise, an absolute value of a subtraction value between samples c and x is obtained and the absolute value is compared with reference value th2. If the absolute value is smaller than reference value th2, a value of zero is output. If not, a value of one is output. Likewise, an absolute value of a subtraction value between samples d and x is obtained and the absolute value is compared with reference value th1. If the absolute value is smaller than reference value th1, a value of zero is output. If not, a value of one is output. That is,
in case of |a-x| <th1, m0=0, in case of |a-x|≥ th1, m0=1,
in case of |b-x| <th2, m1=0, in case of |b-x|≥ th2, m1=1,
in case of |c-x| <th2, m2=0, in case of |c-x|≥ th2, m2=1,
in case of |d-x| <th1, m3=0 and in case of |d-x|≥ th1 m3=1

The spatial information extracting and encoding portion 20 selects one of three methods as described above to extract the spatial correlation information. It can be processed and extracted by software. When processing by hardware, each method has a difference circuit, respectively.

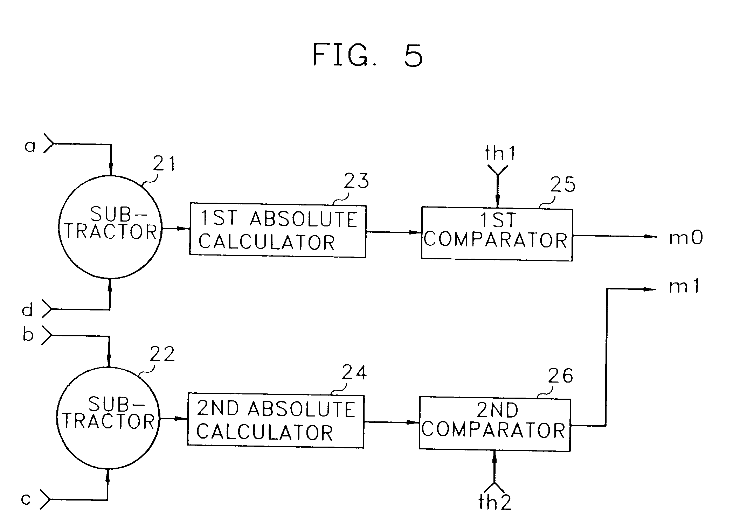

Figure 5 is a block diagram showing a detailed construction of a spatial information extracting and encoding portion of Figure 3, which shows the above first method. As shown in Figure 5, the spatial information extracting and encoding portion 20 includes a first subtractor for subtracting sample signals a and d which are input from memory portion 10, a second subtractor 22 for subtracting samples b and c which are input from memory portion 10. A first absolute calculator 23 and a second absolute calculator 24 are connected to the outputs of first and second subtractors 21 and 22, respectively. As a result, the absolute values of the subtracted values are obtained. The output of first absolute calculator 23 is applied to a first comparator 25. First comparator 25 compares the input signal with preset reference value th1 to general 1-bit spatial correlation information m0. Also, the output of second absolute comparator 24 is applied to a second comparator 26. Second comparator 26 compares the input signal with preset reference value th2 to general 1-bit spatial correlation information m1.

The spatial information extracting and encoding portion as constructed above obtains the absolute value of the subtraction value of the respective sample signals a to d, compares the obtained absolute values with the respectively preset reference values th1 and th2, to form 2-bit spatial correlation information m0 and m1. Here, other circuit constructions according to the remaining methods can be accomplished similar to that of Figure 5.

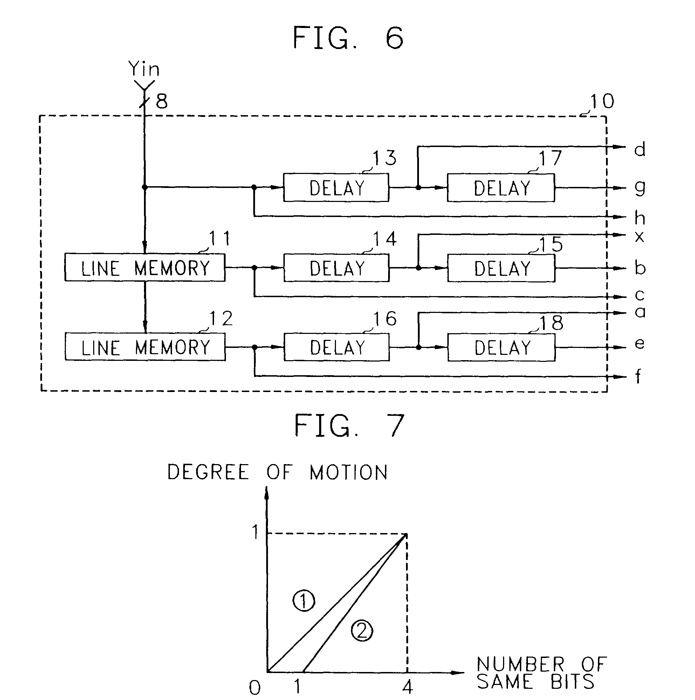

Figure 6 shows another embodiment of a memory portion in Figure 3, which shows how to obtain the correlation information considering even a component of an inclined direction to extract the information on a field using the sample form shown in Figure 4. As shown in Figure 4, memory portion 10 includes two line memories 11 and 12 and six delays 13 to 18. The 8-bit video signal Yᵢₙ input memory portion 10 is applied to spatial information extracting and encoding portion 20 as sample h, which is delayed for a two sample period by delays 13 and 17 and then is applied to spatial information extracting and encoding portion 20 as sample g. The output of delay 13 is applied to spatial information extracting and encoding portion 20 as sample d. At the same time, the 8-bit video signal Yᵢₙ is delayed for a one-line period by line memory 11 and then is applied to spatial information extracting and encoding portion 20 as sample c. The output of line memory 11 is delayed for a two-sample period by delays 14 and 15 and then is applied to spatial information extracting and encoding portion 20 as sample b. The output of delay 14 is applied to spatial information extracting and encoding portion 20 as sample x. Also, the output of line memory 11 is delayed for a one-line period by line memory 12 and then is applied to spatial information extracting and encoding portion 20 as sample f. The output of line memory 12 is delayed for a two-sample period by delays 16 and 18 and then is applied to spatial information extracting and encoding portion 20 as sample e. The output of delay 16 is applied to spatial information extracting and encoding portion 20 as sample a.

Spatial information extracting and encoding portion 20 uses the sample signals input from memory portion 10 of Figure 6 and obtains 4-bit spatial correlation information. Here, the 4-bit spatial correlation information can be reduced into a 3-bit signal by a logical processing of two correlation information m2 and m3. In addition, if the center pixel information which is obtained by using the conventional motion detection method is added to the 3-bit signal, a 4-bit signal can be used for the motion detection.

First of all, an absolute value of a subtraction value of samples a and d is obtained, and then the obtained absolute value is compared with reference value th1. If the absolute value is smaller than reference value th1, a value of zero is output. If not, a value of one is output. Likewise, a subtraction value of samples b and c, a subtraction value of samples e and h and a subtraction value of samples f and g are obtained, and then the obtained subtraction values are compared with reference values th2, th3 and th3, respectively. If the absolute value is smaller than the reference value, a value of zero is output. If not, a value of one is output. That is,
in case of |a-d| <th1, m0=0, in case of |a-d|≥ th1, m0=1,
in case of |b-c| <th2, m1=0, in case of |b-c|≥ th2, m1=1,
in case of |e-h| <th3, m2=0, in case of |e-h|≥ th3, m2=1,
in case of |f-g| <th3, m3=0 and in case of |f-g|≥th3,m3=1

Here, the reference values th1 through th3 can be different from each other according to the respective direction characteristics. However, in most cases, they can be of the same value. Further, the reference values can be of different magnitude according to noise.

The spatial correlation information of 2 to 4 bits output from spatial information extracting and encoding portion 20 is stored in frame memory 30 and is simultaneously to comparator 40. In this embodiment, the frame memory is constructed so that it can be used only with respect to 2 to 4 bits. However, to heighten accuracy 8 bits can be used. The comparator 40 compares the output of spatial information extracting and encoding portion 20 with a value corresponding to the previous frame output from frame memory 30. In case of a motion domain, a value of zero is output, while in case of a still domain, a value of one is output. Here as in the aforementioned third method, when multiple-bit spatial correlation information is used, a soft-switch processing can be done according to how many bits are of the same value, rather than performing a hard-switch one-bit motion detection according to a simple identification.

Figure 7 is a characteristic graph showing a soft-switch processing in comparator of Figure 3. In Figure 7, a degree of motion detection with respect to the number of bits having the same value is represented as two characteristic lines 1 and 2. Here, 1 is an example of estimating a degree of motion detection by proportionally changing an amount of motion according to the number of the same bits. 2 is an example that estimates there is no motion until the number of the same bits becomes one. Also, a number 1 on the vertical axis represents a motion image and a number 0 on the vertical axis represents a still image.

As described above, embodiments of the present invention obtain the correlation information in various directions on a field which is advantageous for the motion detection performance, and compare the obtained correlation information with the value corresponding to the previous frame. Thus, accurate detection of the motion can be achieved, degradation of a picture quality decreased, and the amount of hardware reduced.

## Claims

1. A motion detection circuit using spatial information, the circuit comprising:
a memory portion (10) for delaying an input video signal comprising successive frames, and for sampling the delayed signal to provide a sample format comprising a plurality of pixels from which spatial correlation information can be extracted;
a spatial information extracting and encoding portion (20) for obtaining subtraction values between peripheral pixels of the sample format using the sample signals output from the memory portion (10), detecting a degree of correlation in various directions in a field of a frame by comparing the subtraction value with a preset reference value, and encoding the result into spatial correlation information;
a memory (30) for storing spatial correlation information output from the spatial information extracting and encoding portion (20); and
a comparator portion (40) for comparing the output signal of the spatial information extracting and encoding portion (20)with previous frame spatial correlation information output from the memory (30) and outputting a motion signal which represents whether the input video signal is in a motion domain or a still domain.

2. A motion detection circuit using spatial information according to claim 1, wherein said memory portion (10) comprises:
a first delay (13) for delaying the input video signal for a one-sample period and making the one-sample delayed signal into a first sample (d);
a first line memory (11) for delaying the input video signal for a one-line period and making the one-line delayed signal into a second sample (c) ;
a second delay (14) for delaying the output of said first line memory (11) for a one-sample period and making the one-sample delayed signal into a third sample (x);
a third delay (15) for delaying the output of said second delay (14) for a one-sample period and making the one-sample delayed signal into a fourth sample (b);
a second line memory (12) for delaying the output of said first line memory (11) for a one-line period; and
a fourth delay (16) for delaying the output of said second line memory (12) for a one-sample period and making the one-sample delayed signal into a fifth sample (a).

3. A motion detection circuit using spatial information according to claim 2, wherein said memory portion (10) further comprises:
a fifth delay (17) for delaying the output of said first delay (13) for a one-sample period and making the one-sample delayed signal into a sixth sample (g); and
a sixth delay (18) for delaying the output of said fourth delay (16) for a one-sample period and making the one-sample delayed signal into a seventh sample (e).

4. A motion detection circuit using spatial information according to any of claims 1 to 3, wherein said spatial information extracting and encoding portion (20) comprises:
a first subtracter (21) for subtracting the fifth and first sample signals (a and d) which are applied from said memory portions (10);
a second subtracter (22) for subtracting fourth and second sample signals (b and c) which are applied from said memory portions (10);
a first absolute value calculator (23) for obtaining an absolute value of the output of said first subtracter (21);
a second absolute value calculator (24) for obtaining an absolute value of the output of said second subtracter (22);
a first comparator (25) for comparing the output of said first absolute value calculator (23) with a preset reference value to generate one-bit spatial correlation information; and
a second comparator (26) for comparing the output of said second absolute value calculator (24) with a preset reference value to generate one-bit spatial correlation information.

5. A motion detection circuit using spatial information according to any of the preceding claims, wherein said comparator portion (40) checks how many bits having the same value there are, and estimates the motion according to the number of same value bits.

6. A motion detection circuit using spatial information according to claim 5, wherein said comparator portion (40) estimates that there is no motion until the number of the same bits becomes a predetermined number, while said comparator portion (40) estimates the motion according to the number of the same bits when the number of the same bits is equal to or larger than a predetermined number.

7. A motion detection method using spatial information, comprising the steps of:
delaying an input video signal comprising successive frames and sampling the delayed signal to provide a sample format comprising a plurality of pixels from which spatial correlation information can be extracted;
obtaining subtraction values of the sample signals, comparing the subtraction value with a reference value, encoding the result into spatial correlation information and extracting said spatial correlation information which has been encoded into a number of bits; and
comparing the currently extracted spatial correlation information with previous frame spatial correlation information and determining whether the input signal is in a motion domain or a still domain.

8. A motion detection method using spatial information according to claim 7, wherein said spatial correlation information extracting step obtains two-bit spatial correlation information according to the following equations:
in case of |a-d| <th1, m0=0; in case of |a-d|≥th1, m0=1;
in case of |c-b| <th2, m1=0; and in case of |c-b|≥th2,m1=1
wherein said a, b, c and d are a one-sample signal, respectively, said th1 and th2 are a reference value according to a direction characteristic and noise, respectively, and said m0 and m1 are the two-bit spatial correlation information, respectively.

9. A motion detection method using spatial information according to claim 8, wherein said spatial correlation information extracting step further comprises the steps of obtaining one-bit spatial correlation information according to the following equations and adding the obtained one-bit correlation information to the other two-bit spatial correlation information:
in case of x <th3, m2=1; and in case of x≥th3, m2=0,
wherein said x represents a one-sample signal, said th3 is a preset reference value and said m2 is spatial correlation information.

10. A motion detection method using spatial information according to claim 8, wherein said spatial correlation information extracting step further comprises the steps of obtaining two-bit spatial correlation information according to the following equations and adding the obtained two-bit correlation information to the other two-bit spatial correlation information:
in case of |e-h| <th3, m2=0; in case of |e-h|≥ th3, m2=1;
in case of |f-g| <th3, m3=0; and in case of |f-g|≥th3,m3=1
wherein said e, f, g and h are a one-sample signal, respectively, said th3 is a preset reference value, and said m2 and m3 are spatial correlation information, respectively.

11. A motion detection method using spatial information according to claim 7, wherein said spatial correlation information extracting step further comprises the steps of obtaining four-bit spatial correlation information using a different signal between a center pixel and peripheral pixels obtained according to the following equations:
in case of |a-x| <th1, m0=0; in case of |a-x|≥th1, m0=1;
in case of |b-x| <th2, m1=0; in case of |b-x|≥th2, m1=1;
in case of |c-x| <th2, m2=0; in case of |c-x|≥th2, m2=1;
in case of |d-x| <th1, m3=0; and in case of |d-x|≥, m3=1
wherein said a, b, c, d and x are a one-sample signal, respectively, said th1 and th2 are a reference value set according to a direction characteristic and noise, respectively, and said m0, m1, m2 and m3 are spatial correlation information, respectively.

12. A motion detection method using spatial information according to claim 11, wherein said spatial correlation information extracting step further comprises the steps of obtaining one-bit spatial correlation information according to the following equations and adding the obtained one-bit correlation information to the other four-bit spatial correlation information:
in case of x <th3, m3=1; and
in case of x≥ th3, m3=0,
wherein said th3 is a preset reference value and said m3 is spatial correlation information.

## Patentansprüche

1. Schaltung zur Bewegungserfassung unter Verwendung räumlicher Information mit:
einem Speicherbereich (10) zum Verzögern eines eingespeisten Videosignals mit aufeinanderfolgenden Bildern, und zum Abtasten des verzögerten Signals, um ein Abtastformat mit mehreren Pixeln, von denen eine räumliche Korrelationsinformation herausgelöst werden kann, bereitzustellen;
einem Bereich (20) für Herauslösung räumlicher Information und Codierung zum Erhalten von Differenzwerten zwischen peripheren Pixeln des Abtastformats unter Verwendung der vom Speicherbereich (10) ausgegebenen Abtastsignale, zum Erfassen eines Korrelationsmaßes in diversen Richtungen in einem Feld eines Bildes durch Vergleichen des Subtraktionswerts mit einem festgelegten Referenzwert, und zum Codieren des Ergebnisses in eine räumliche Korrelationsinformation;
einem Speicher (30) zum Speichern einer vom Bereich (20) für Herauslösung räumlicher Information und Codierung ausgegebenen räumlichen Korrelationsinformation; und
einem Komparatorbereich (40) zum Vergleichen des Ausgangssignals des Bereichs (20) für Herauslösung räumlicher Information und Codierung mit räumlicher Korrelationsinformation eines vorhergehenden Bildes, die vom Speicher (30) ausgegeben wird, und zum Ausgeben eines Bewegungssignals, das repräsentiert, ob das eingespeiste Videosignal in einem Bewegungsbereich oder einem Ruhebereich ist.

2. Die Schaltung zur Bewegungserfassung unter Verwendung räumlicher Information nach Anspruch 1, wobei der Speicherbereich (10) umfaßt:
ein erstes Verzögerungselement (13) zum Verzögern des eingespeisten Videosignals um eine Abtastperiode und zum Überführen des um eine Abtastperiode verzögerten Signals in ein erstes Abtastsignal (d);
einen ersten Zeilenspeicher (11) zum Verzögern des eingespeisten Videosignals um eine Zeilenperiode und zum Überführen des um eine Zeilenperiode verzögerten Signals in ein zweites Abtastsignal (c);
ein zweites Verzögerungselement (14) zum Verzögern des Ausgangssignals des ersten Zeilenspeichers (11 ) um eine Abtastungsperiode und zum Überführen des um eine Abtastperiode verzögerten Signals in ein drittes Abtastsignal (x);
ein drittes Verzögerungselement (15) zum Verzögern des Ausgangssignals des zweiten Verzögerungselements (14) um eine Abtastperiode und zum Überführen des um eine Abtastperiode verzögerten Signals in ein viertes Abtastsignal (b);
einen zweiten Zeilenspeicher (12) zum Verzögern des Ausgangssignals des ersten Zeilenspeichers (11) um eine Zeilenperiode; und
ein viertes Verzögerungselement (16) zum Verzögern des Ausgangssignals des zweiten Zeilenspeichers (12) um eine Abtastungsperiode und zum Überführen des um eine Abtastperiode verzögerten Signals in ein fünftes Abtastsignal (a).

3. Die Schaltung zur Bewegungserfassung unter Verwendung räumlicher Information nach Anspruch 2, wobei der Speicherbereich (10) weiterhin umfaßt:
ein fünftes Verzögerungselement (17) zum Verzögern des Ausgangssignals des ersten Verzögerungselements (13) um eine Abtastperiode und zum Überführen des um eine Abtastperiode verzögerten Signals in ein sechstes Abtastsignal (g); und
ein sechstes Verzögerungselement (18) zum Verzögern des Ausgangssignals des vierten Verzögerungselements (16) um eine Abtastperiode und zum Überführen des um eine Abtastperiode verzögerten Signals in ein siebtes Abtastsignal (e).

4. Die Schaltung zur Bewegungserfassung unter Verwendung räumlicher Information nach einem der Ansprüche 1 bis 3, wobei der Bereich (20) für Herauslösung räumlicher Information und Codierung umfaßt:
einen ersten Subtrahierer (21) zum Subtrahieren des fünften und ersten Abtastsignals (a und d), die vom Speicherbereich (10) geliefert werden;
einen zweiten Subtrahierer (22) zum Subtrahieren der vierten und zweiten Abtastsignale (b und c), die vom Speicherbereich (10) geliefert werden:
einen ersten Absolutwertberechner (23) zum Ermitteln eines Absolutwerts des Ausgangssignals des ersten Subtrahierers (21);
einen zweiten Absolutwertberechner (24) zum Ermitteln eines Absolutwerts des Ausgangssignals des zweiten Subtrahierers (22);
einen ersten Komparator (25) zum Vergleichen des Ausgangssignals des ersten Absolutwertberechners (23) mit einem festgelegten Referenzwert, um eine räumliche Ein-Bit-Korrelationsinformation zu erzeugen; und
einen zweiten Komparator (26) zum Vergleichen des Ausgangssignals des zweiten Absolutwertberechners (24) mit einem festgelegten Referenzwert, um eine räumliche Ein-Bit-Korrelationsinformation zu erzeugen.

5. Die Schaltung zur Bewegungserfassung unter Verwendung räumlicher Information gemäß einem der vorhergehenden Ansprüche, wobei der Komparatorbereich (40) die Anzahl der Bits mit gleichem Wert feststellt und die Bewegung gemäß der Anzahl der Bits mit gleichem Wert bestimmt.

6. Die Schaltung zur Bewegungserfassung unter Verwendung räumlicher Information nach Anspruch 5, wobei der Komparatorbereich (40) bestimmt, daß es keine Bewegung gibt solange die Anzahl der Bits mit gleichem Wert gleich einer vorbestimmten Anzahl ist, während der Komparatorbereich (40) die Bewegung gemäß der Anzahl der Bits mit gleichem Wert bestimmt, wenn die Anzahl der Bits gleichen Wertes gleich oder größer als eine vorbestimmte Anzahl ist.

7. Das Verfahren zur Bewegungserfassung unter Verwendung räumlicher Information mit den Schritten:
Verzögern eines eingespeisten Videosignals mit aufeinanderfolgenden Bildern und Abtasten des verzögerten Signals, um ein Abtastformat mit mehreren Pixeln, von denen räumliche Korrelationsinformation herausgelöst werden kann, bereitzustellen;
Ermitteln von Differenzwerten der Abtastsignale, Vergleichen des Differenzwerts mit einem Referenzwert, Codieren des Ergebnisses in räumliche Korrelationsinformation und Herauslösen der räumlichen Korrelationsinformation, die in eine Anzahl von Bits codiert worden ist; und
Vergleichen der aktuell herausgelösten räumlichen Korrelationsinformation mit der räumlichen Korrelationsinformation eines vorhergehenden Bildes und Bestimmen, ob das eingespeiste Signal in einem Bewegungsbereich oder einem Ruhebereich ist.

8. Das Verfahren zur Bewegungserfassung unter Verwendung räumlicher Information nach Anspruch 7, wobei der Schritt zur Herauslösung räumlicher Korrelationsinformation eine räumliche Zwei-Bit-Korrelationsinformation entsprechend den folgenden Gleichungen bestimmt:
wenn |a-d| <th1, m0=0; wenn |a-d|≥th1, m0=1;
wenn |c-b| <th2, m1=0; und wenn |c-b|≥th2, m1=1, wobei a, b, c und d jeweils ein Ein-Abtastungssignal ist, th1 und th2 jeweils einen Referenzwert entsprechend einer Richtungseigenschaft und dem Rauschens ist, und m0 und m1 jeweils die räumliche Zwei-Bit-Korrelationsinformation ist.

9. Das Verfahren zur Bewegungserfassung unter Verwendung räumlicher Information nach Anspruch 8, wobei der Schritt zum Herauslösen räumlicher Korrelationsinformation weiterhin die Schritte umfaßt: Ermitteln einer räumlichen Ein-Bit-Korrelationsinformation gemäß den folgenden Gleichungen und Addieren der erhaltenen Ein-Bit-Korrelationsinformation zu der anderen räumlichen Zwei-Bit-Korrelationsinformation:
wenn x <th3, m2=1; und wenn x≥th3, m2=0,
wobei x ein Ein-Abtastungssignal, th3 einen festgelegten Referenzwert und m2 die räumliche Korrelationsinformation repräsentiert.

10. Das Verfahren zur Bewegungserfassung unter Verwendung räumlicher Information nach Anspruch 8, wobei der Schritt zum Herauslösen räumlicher Korrelationsinformation weiterhin die Schritte umfaßt: Bestimmen einer räumlichen Zwei-Bit-Korrelationsinformation gemäß den folgenden Gleichungen und Addieren der erhaltenen Zwei-Bit-Korrelationsinformation zu der anderen räumlichen Zwei-Bit-Korrelationsinformation:
wenn |e-h| <th3, m2=0; wenn |e-h| ≥th3, m2=1;
wenn |f-g| <th3, m3=0; und wenn |f-g| ≥th3, m3=1,
wobei e;f, g und h jeweils Ein-Abtastungssignale sind, th3 ein festgelegter Referenzwert ist und m2 und m3 jeweils räumliche Korrelationsinformationen sind.

11. Das Verfahren zur Bewegungserfassung unter Verwendung räumlicher Information nach Anspruch 7, wobei der Schritt zum Herauslösen räumlicher Korrelationsinformation weiterhin die Schritte umfaßt: Ermitteln einer räumlichen Vier-Bit-Korrelationsinformation unter Verwendung eines Differenzsignals zwischen einem zentralen Pixel und peripheren Pixeln, das gemäß den folgenden Gleichungen erhalten wird:
wenn |a-x| <th1, m0=0; wenn |a-x|≥th1, m0=1;
wenn |b-x| <th2, m1=0; wenn |b-x|≥th2, m1=1;
wenn |c-x| <th2, m2=0; wenn |c-x|≥th2, m2=1;
wenn |d-x| <th1, m3=0; und wenn |d-x| ≥th2, m3=1,
wobei a, b, c, d und x jeweils Ein-Abtastungssignale, th1 und th2 jeweils ein Referenzwertsatz gemäß einer Richtungseigenschaft und dem Rauschen, und m0, m1, m2 und m3 jeweils räumliche Korrelationsinformationen sind.

12. Das Verfahren zur Bewegungserfassung unter Verwendung räumlicher Information nach Anspruch 11, wobei der Schritt zum Herauslösen räumlicher Korrelationsinformation weiterhin die Schritte umfaßt: Ermitteln einer räumlichen Ein-Bit-Korrelationsinformation gemäß den folgenden Gleichungen und Addieren der erhaltenen Ein-Bit-Korrelationsinformation zu der anderen räumlichen Vier-Bit-Korrelationsinformation:
wenn x <th3, m3=1; und
wenn x≥th3, m3=0,
wobei th3 ein festgelegter Referenzwert und m 3 eine räumliche Korrelationsinformation ist.

## Revendications

1. Circuit de détection de mouvement employant des données spatiales, le circuit comprenant :
une partie formant mémoire (10) permettant de temporiser un signal vidéo d'entrée comprenant des trames successives et d'échantillonner le signal temporisé afin de fournir un format d'échantillon comprenant une pluralité de pixels à partir desquels des données de corrélation spatiale peuvent être extraites ;
une partie d'extraction et de codage des données spatiales (20) permettant d'obtenir des valeurs de soustraction entre des pixels périphériques du format d'échantillon utilisant les signaux échantillonnés provenant de la partie formant mémoire (10), de détecter un degré de corrélation dans diverses directions dans un champ d'une trame en comparant la valeur de soustraction avec une valeur de référence prédéfinie et de coder le résultat en données de corrélation spatiale ;
une mémoire (30) permettant de stocker la sortie des données de corrélation spatiale provenant de la partie d'extraction et de codage des données spatiales (20) ; et
un partie formant comparateur (40) permettant de comparer le signal de sortie de la partie d'extraction et de codage des données spatiales (20) avec la sortie des données de corrélation spatiale des trames antérieures provenant de la mémoire (30) et de sortir un signal de mouvement qui indique si le signal vidéo est dans un domaine animé ou dans un domaine fixe.

2. Circuit de détection de mouvement employant des données spatiales selon la revendication 1, dans lequel ladite partie formant mémoire (10) comprend :
une première temporisation (13) permettant de temporiser le signal vidéo d'entrée sur une période d'un échantillon et de transformer le signal temporisé d'un échantillon en un premier échantillon (d) ;
une première mémoire de lignes (11) permettant de temporiser le signal vidéo d'entrée sur une période d'une ligne et de transformer le signal temporisé d'une ligne en un deuxième échantillon (c) ;
une deuxième temporisation (14) permettant de temporiser la sortie de ladite première mémoire de lignes (11) sur une période d'un échantillon et de transformer le signal temporisé d'un échantillon en un troisième échantillon (x) ;
une troisième temporisation (15) permettant de temporiser la sortie de ladite deuxième temporisation (14) sur une période d'un échantillon et de transformer le signal temporisé d'un échantillon en un quatrième échantillon (b) ;
une deuxième mémoire de lignes (12) permettant de temporiser la sortie de ladite première mémoire de lignes (11) sur une période d'une ligne ; et
une quatrième temporisation (16) permettant de temporiser la sortie de ladite deuxième mémoire de lignes (12) sur une période d'un échantillon et de transformer le signal temporisé d'un échantillon en un cinquième échantillon (a) .

3. Circuit de détection de mouvement employant des données spatiales selon la revendication 2, dans lequel ladite partie formant mémoire (10) comprend en outre :
une cinquième temporisation (17) permettant de temporiser la sortie de ladite première temporisation (13) sur une période d'un échantillon et de transformer le signal temporisé d'un échantillon en un sixième échantillon (g) ; et
une sixième temporisation (18) permettant de temporiser la sortie de ladite quatrième temporisation (16) sur une période d'un échantillon et de transformer le signal temporisé d'un échantillon en un septième échantillon (e).

4. Circuit de détection de mouvement employant des données spatiales selon l'une quelconque des revendications 1 à 3, dans lequel ladite partie d'extraction et de codage des données spatiales (20) comprend :
un premier soustracteur (21) permettant de soustraire les cinquième et premier signaux échantillonnés (a et d) qui sont appliqués à partir de la partie formant mémoire (10) ;
un deuxième soustracteur (22) permettant de soustraire les quatrième et deuxième signaux échantillonnés (b et c) qui sont appliqués à partir de la partie formant mémoire (10) ;
un premier calculateur de valeur absolue (23) permettant d'obtenir une valeur absolue de la sortie dudit premier soustracteur (21) ;
un deuxième calculateur de valeur absolue (24) permettant d'obtenir une valeur absolue de la sortie dudit deuxième soustracteur (22) ;
un premier comparateur (25) permettant de comparer la sortie dudit premier calculateur de valeur absolue (23) avec une valeur de référence prédéfinie afin de générer des données de corrélation spatiale à un binaire ; et
un deuxième comparateur (26) permettant de comparer la sortie dudit deuxième calculateur de valeur absolue (24) avec une valeur de référence prédéfinie afin de générer des données de corrélation spatiale à un binaire.

5. Circuit de détection de mouvement employant des données spatiales selon l'une quelconque des revendications précédentes, dans lequel ladite partie formant comparateur (40) vérifie le nombre de binaires ayant la même valeur et estime le mouvement en fonction du nombre de binaires de même valeur.

6. Circuit de détection de mouvement employant des données spatiales selon la revendication 5, dans lequel ladite partie formant comparateur (40) estime qu'il n'y a pas de mouvement tant que le nombre de binaires de même valeur n'a pas atteint un nombre prédéterminé, alors que ladite partie formant comparateur (40) estime qu'il y a mouvement en fonction du nombre de binaires de même valeur lorsque ce nombre est égal ou supérieur à un nombre prédéterminé.

7. Procédé de détection de mouvement employant des données spatiales comprenant les étapes de :
temporisation d'un signal vidéo d'entrée comprenant des trames successives et échantillonnage du signal temporisé afin de fournir un format d'échantillon comprenant une pluralité de pixels à partir desquels des données de corrélation spatiale peuvent être extraites ;
obtention de valeurs de soustraction des signaux échantillonnés, comparaison de la valeur de soustraction avec une valeur de référence, codage du résultat en données de corrélation spatiale et extraction desdites données de corrélation spatiale qui ont été codées en un nombre de binaires ; et
comparaison des données de corrélation spatiale actuellement extraites avec des données de corrélation spatiale d'une trame précédente et détermination du fait de savoir si le signal d'entrée est dans un domaine animé ou dans un domaine fixe.

8. Procédé de détection de mouvement employant des données spatiales selon la revendication 7, dans lequel ladite étape d'extraction des données de corrélation spatiale obtient des données de corrélation spatiale à deux binaires en fonction des équations suivantes :
si |a-d| < th1, m0 = 0 ; si |a-d| ≥ th1, m0 = 1 ;
si |c-b| < th2, m1 = 0 ; et si |c-b| ≥ th2, m1 = 1
où a, b, c et d sont, respectivement, des signaux à un échantillon, th1 et th2 sont, respectivement, des valeurs de référence fonction d'une caractéristique de direction et du bruit et m0 et m1 sont, respectivement, les données de corrélation spatiale à deux binaires.

9. Procédé de détection de mouvement employant des données spatiales selon la revendication 8, dans lequel ladite étape d'extraction des données de corrélation spatiale comprend en outre les étapes d'obtention de données de corrélation spatiale à un binaire en fonction des équations suivantes et en ajoutant les données de corrélation spatiale à un binaire obtenues aux autres données de corrélation spatiale à deux binaires :
si x < th3, m2 = 1 ; et si x ≥ th3, m2 = 0
où x représente un signal à un échantillon, th3 est une valeur de référence prédéfinie et m2 représente les données de corrélation spatiale.

10. Procédé de détection de mouvement employant des données spatiales selon la revendication 8, dans lequel ladite étape d'extraction des données de corrélation spatiale comprend en outre les étapes d'obtention de données de corrélation spatiale à deux binaires en fonction des équations suivantes et en ajoutant les données de corrélation spatiale à deux binaires obtenues aux autres données de corrélation spatiale à deux binaires :
si |e-h| < th3, m2 = 0 ; si |e-h| ≥ th3, m2 = 1 ;
si |f-g| < th3, m3 = 0 ; et si |f-g| ≥ th3, m3 = 1
où lesdits e, f, g et h sont des signaux à un échantillon respectivement, ledit th3 est une valeur de référence prédéfinie et lesdits m2 et m3 sont les données de corrélation spatiale, respectivement.

11. Procédé de détection de mouvement employant des données spatiales selon la revendication 7, dans lequel ladite étape d'extraction des données de corrélation spatiale comprend en outre les étapes d'obtention de données de corrélation spatiale à quatre binaires, utilisant un signal différent entre un pixel central et des pixels périphériques, obtenues en fonction des équations suivantes :
si |a-x| < th1, m0 = 0 ; si |a-x| ≥ th1, m0 =1 ;
si |b-x| < th2, m1 = 0 ; si |b-x| ≥ th2, m1 =1 ;
si |c-x| < th2, m2 = 0 ; si |c-x| ≥ th2, m2 = 1 ;
si |d-x| < th1, m3 = 0 ; et si |d-x| ≥ th1, m3 = 1
où lesdits a, b, c, d et x sont des signaux à un échantillon respectivement, lesdits th1 et th2 sont des valeurs de référence fonction d'une caractéristique de direction et du bruit, respectivement, et lesdits m0, m1, m2 et m3 sont des données de corrélation spatiale, respectivement.

12. Procédé de détection de mouvement employant des données spatiales selon la revendication 11, dans lequel ladite étape d'extraction des données de corrélation spatiale comprend en outre les étapes d'obtention de données de corrélation spatiale à un binaire en fonction des équations suivantes et en ajoutant les données de corrélation spatiale à un binaire obtenues aux autres données de corrélation spatiale à quatre binaires :
si x < th3, m3 = 1 ; et
si x ≥ th3, m3 = 0
où th3 est une valeur de référence prédéfinie et ledit m3 est les données de corrélation spatiale.
